# EUROPEAN PATENT SPECIFICATION

(11) **EP 3 778 145 B1**
(45) Date of publication and mention of the grant of the patent: **29.05.2024**
(21) Application number: 19780679.7
(22) Date of filing: 05.04.2019
(51) Int. Cl.: G05D 1/02, A01D 34/00

(54) **MOBILE ROBOT AND CONTROL METHOD OF MOBILE ROBOT**
TRAGBARER ROBOTER UND STEUERUNGSVERFAHREN FÜR TRAGBAREN ROBOTER
ROBOT MOBILE ET PROCÉDÉ DE COMMANDE DU ROBOT MOBILE

(30) Priority: 06.04.2018 US 201862653567 P
(43) Date of publication of application: 17.02.2021
(73) Proprietor: LG Electronics Inc., Yeongdeungpo-gu Seoul 07336 (KR)
(72) Inventor: LEE, Jaehoon, Seoul 08592 (KR); CHOI, Kyuchun, Seoul 08592 (KR); WOO, Jongjin, Seoul 08592 (KR); KIM, Dongseong, Seoul 08592 (KR); KIM, Hyungsub, Seoul 08592 (KR); SHIN, Seungin, Seoul 08592 (KR); YU, Kyungman, Seoul 08592 (KR); JEONG, Jaehoon, Seoul 08592 (KR); NAM, Dongkyun, Seoul 08592 (KR); JOO, Hyungkook, Seoul 08592 (KR)
(74) Representative: Ter Meer Steinmeister & Partner
(86) International application number: PCT/KR2019/004063
(87) International publication number: WO 2019/194636

(56) References cited:
- WO-A1-2016/097897
- KR-A- 20050 063 543
- KR-A- 20060 032 305
- KR-A- 20070 090 864
- KR-A- 20090 074 545
- KR-A- 20160 128 124
- US-A1- 2016 285 288
- US-A1- 2018 081 366

## Description

### BACKGROUND OF THE DISCLOSURE

### Field of the disclosure

The present disclosure relates to a moving robot which effectively constitutes a cleaning path of the moving robot and a control method of the moving robot.

### Related Art

A robot has been developed for industrial use and has been responsible for a portion of factory automation. In recent years, a field of application of the robot has been further expanded, a medical robot, an aerospace robot, or the like has been developed, and a home robot that can be used in a general home is also manufactured. Among these robots, a robot capable of traveling by itself is called a moving robot. A typical example of the moving robot used in an outdoor environment of a home is a lawn mowing robot.

In a case of a moving robot autonomously traveling indoors, a movable area is limited by a wall or furniture, but in a case of a mobile robot autonomously traveling outdoors, there is a need to set a movable area in advance. In addition, there is a need to limit the movable area so that the lawn mowing robot travels in an area where grass is planted.

In the related art (Korean Laid-Open Patent Publication No. 2015-0125508), a wire is buried to set an area in which a lawn mower robot is to be moved, and the lawn mower robot senses a magnetic field formed by a current flowing through the wire and can move within an area set by the wire.

According to the related art, a traveling area set for a convenience and efficiency of cleaning is divided into a plurality of areas and cleaning is sequentially started. However, since the lawn mower robot is driven outdoors, it is difficult for the lawn mower rotor to map the traveling zone through an image and accurately recognize a current position on the map, as if driving indoors.

Therefore, in the related art, it is common to use Dead Reckoning (Odometer + AHRS) to recognize the position of the lawn mower robot. However, over time, it is difficult to accurately recognize the position of the lawn mower robot due to slip of a wheel, diversity of friction with the lawn, and time accumulation of Dead Reckoning (Odometer + AHRS), and as the position of the lawn mower robot deviates from an estimated position on a map, an error occurs in operation.

In addition, Korean Laid-Open Patent Publication No. 2016-0053255 discloses a configuration which catches a detection error at the current point in time, but there is a problem that it is not possible to solve an accumulated error while the moving robot travels.

US 2016/285288 A1 presents a charging station and charging station guide for autonomously navigating utility vehicle. In a charging station for charging a battery installed on an autonomously navigating utility vehicle equipped with a prime mover powered by the battery to travel about a working area delineated by a boundary wire, there are provided with a pair of charging terminals installed on the station to be capable of connecting with a pair of charging terminals installed on the vehicle, a first wire installed on the station at a location inside of the working area and being formed as a circular shape having a center, and a second wire installed on the station to be formed as a shape that is symmetrical with respect to a center line obtained by connecting a midpoint of the terminals and the center of the first wire.

WO 2016/097897 A1 presents a robotic vehicle that may include one or more functional components configured to execute a lawn care function, a sensor network comprising one or more sensors configured to detect conditions proximate to the robotic vehicle, and a monitoring module configured to monitor data gathered via the sensor network responsive to traversing the parcel. The monitoring module may also selectively initiate an alarm or notification function in response to the data indicating the occurrence of a trigger event.

US 2018/081366 A1 relates to a self-moving robot system capable of moving and working in a preset working area and a self-moving robot system capable of being returned to a certain preset position automatically.

### SUMMARY

One task of the present disclosure is to provide a moving robot and a control method of a moving robot which reset a position of the moving robot by returning to a charging station after completing a work in one traveling zone and continuously perform a work.

Another task of the present disclosure is to provide a moving robot and a control method of a moving robot which return to the charging station every certain time in order to recognize a correct position on a map.

Still another task of the present disclosure is to provide a moving robot and a control method of a moving robot capable of accurately recognizing a position even if an accumulated error in position recognition occurs due to a long work time and a long movement distance.

Still another task of the present disclosure is to provide a moving robot and a control method of the moving robot which share a sensor for recognizing a boundary of a traveling path without attaching a separate additional sensor.

One or more objects of the present technique are achieved by the invention set out by the features of the independent claim(s).

In order to achieve to the tasks, according to a moving robot and a control method of a moving robot of the present disclosure, it is possible to rest a position of the moving robot by returning to a charging station at a regular time or after completing traveling in one traveling area.

Specifically, according to an aspect of the present disclosure, there is provided a moving robot including: body which forms an appearance; a traveler which moves the body; a boundary signal detector which detects a boundary signal generated in a boundary of a traveling area and a docking position signal generated in a docking device; an azimuth sensor which senses an acceleration of the body; and a controller which defines the traveling area based on the boundary signal, in which when a position correction of the moving robot is required while the moving robot travels the traveling area, the controllers resets a position of a moving robot based on a position of the docking device after the moving robot moves to the docking device.

The controller may control the traveler so that the moving robot continues to travel an incomplete traveling in the traveling area after the moving robot resets the position of the moving robot.

The controller may control the traveler so that the moving robot moves along the boundary signal when the moving robot moves to the docking device.

The controller may control the traveler so that the moving robot changes a traveling direction by a random number of times within an area set with a boundary line calculated based on the boundary signal as a central axis when the moving robot moves to the docking device.

The boundary signal detector may distinguish the docking position signal and the boundary signal by a difference in a direction of a magnetic field.

A case where a position correction of the moving robot is required is when a preset time elapses from a traveling start of the moving robot.

The controller defines the traveling area based on the boundary signal and may divide the traveling area into a plurality of traveling areas including at least a first traveling area and a second traveling area, and a case where a position correction of the moving robot is required may be when the moving robot completes traveling of the first traveling area.

The controller may control the traveler so that the moving robot travels the second traveling area after the moving robot resets the position of the moving robot.

The controller may control the traveler so that the moving robot moves along the boundary signal to a traveling starting point of the second traveling area after the moving robot resets the position of the moving robot.

The azimuth sensor may calculate a direction angle of the body, and the controller may control the traveler so that the moving robot performs a first pattern traveling in the first traveling area at a first direction angle and performs a second pattern traveling in the second traveling area at a second direction angle intersecting the first direction angle.

There is provided a control method of a moving robot including: a division step of defining a traveling area based on a boundary signal and dividing the traveling area into a first traveling area and a second traveling area; a first traveling step of the moving robot traveling in the first traveling area; a returning step of the moving robot returning to a docking device after completing the first traveling; and a position correction step of resetting the position of the moving robot based on a docking position signal generated in the docking device.

Moreover, the control method of a moving robot may further include a movement step of the moving robot moving to a traveling starting portion of the second traveling area after the position correction step; and a second traveling step of the moving robot traveling the second traveling area at the traveling starting point of the second traveling area.

The moving may move along the boundary signal when moving to the traveling starting point of the second traveling area.

Moreover, according to still another aspect of the present disclosure, there is provided a control method of a moving robot including: a traveling area definition step of defining a traveling area based on a boundary signal; a traveling step of a moving robot traveling the traveling area; a returning step of the moving robot returning to a docking device when a preset time elapses from a traveling starting point while the moving robot travels the traveling area; and a position correction step of resetting a position of the moving robot based on a docking position signal generated in the docking device.

Here, the control method of a moving robot may further include a continuous traveling step of the moving robot continuing to travel incomplete traveling of the traveling area after the position correction step.

According to the aspects of the present disclosure, there are advantages that a position of the moving robot is reset by returning to a charging station at a regular time, and thus, it is possible to accurately travel a plurality of traveling zones while reducing the accumulation of positional errors when the moving robot travels outdoors where an accurate position calculation is difficult.

According to the present disclosure, there are advantages that the traveling zone is divided into the plurality of traveling zones to perform cleaning, and errors are reduced when moving each divided zone.

According the present disclosure, there are advantages that the moving robot returns to a random path around the wire when returning to the docking device for resetting the position of the moving robot, and thus, damages around the wire are prevented.

Moreover, according to the present disclosure, after cleaning in one traveling area is completed, the pattern traveling having another direction angle is performed. Accordingly, there is an advantage that it is possible to prevent only some areas of the traveling areas from being repeatedly performed due to the pattern traveling having the same direction angle.

Moreover, in the present disclosure, recognizing the position of the charging station, recognizing the boundary of the traveling area, and recognizing the adjacent boundary area are all performed by one sensor using a magnetic field signal, the position of the charging station and the boundary are distinguished and a homing path is recognized by a direction difference, a distribution difference, an intensity difference. Accordingly, there are advantages that a manufacturing cost is reduced and a control burden of the controller is reduced.

Moreover, according to the present disclosure, a simple configuration is added in which a conductive wire is disposed inside the docking device. Accordingly, there are advantages that the manufacturing cost is reduced, the boundary wires constituting the boundary can be used in common, and the boundary wires can be driven by one power source.

### BRIEF DESCRIPTION OF THE DRAWINGS

FIG. 1 is a perspective view illustrating a moving robot 100 according to an embodiment of the present disclosure.
FIG. 2 is an elevational view when viewing a front surface of the moving robot of FIG. 1.
FIG. 3 is an elevational view when viewing a right surface of the moving robot of FIG. 1.
FIG. 4 is an elevational view when viewing a bottom surface of the moving robot of FIG. 1.
FIG. 5 is a perspective view illustrating a docking device 200 which docks the moving robot 100 of FIG. 1.
FIG. 6 is an elevational view when the docking device 200 of FIG. 5 is viewed from the front.
FIG. 7a is a view when a reference wire according to an embodiment of the present disclosure is viewed from the rear.
FIG. 7b is a view when the reference wire according to the embodiment of the present disclosure is viewed from one side.
FIG. 8 is a block diagram illustrating a control relationship of the moving robot 100 of FIG. 1.
FIG. 9 is a view illustrating a pattern traveling of the moving robot according to an embodiment of the present disclosure.
Fig. 10 is a view illustrating a traveling area according to an embodiment of the present disclosure.
Figs. 11a to 11d are views illustrating a traveling method of a moving robot according to a first example not covered by the appended claims.
Fig. 12 is a view illustrating a traveling method of a moving robot according to a second example not covered by the appended claims.
Figs. 13a to 13c are views illustrating a traveling method of a moving robot according to an embodiment of the present disclosure.
Fig. 14 is a flowchart illustrating a control method of a moving robot according to the first example.
Fig. 15 is flowchart illustrating a control method of a moving robot according to the embodiment of the present disclosure.

### DESCRIPTION OF EXEMPLARY EMBODIMENTS

Expressions referring to directions such as "front(F) / rear(R) / left(Le) / right(Ri) / up (U) / down (D)" mentioned below are defined as indicated in the drawings. However, the expressions are only to explain the present disclosure so that the present disclosure can be clearly understood, and the directions may be differently defined depending on a criterion.

Use of terms "first and second" in front of components mentioned below is only to avoid confusion of the referred component, and is independent of an order, importance, or master/slave relationship between the components. For example, an invention including only a second component without a first component can be implemented.

In the drawings, a thickness or a size of each component is exaggerated, omitted, or schematically illustrated for convenience and clarity of the explanation. The size and area of each component do not entirely reflect the actual size or area.

Moreover, an angle and a direction mentioned in describing a structure of the present disclosure are based on those described in the drawings. In description of a structure in the specification, if a reference point and a positional relationship with respect to the angle are not explicitly mentioned, reference is made to the related drawings.

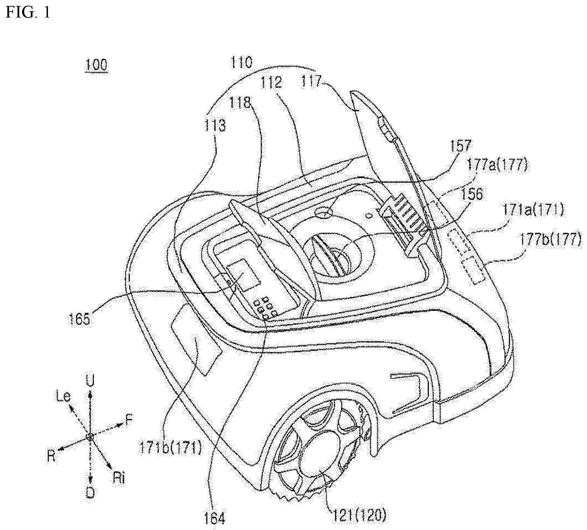

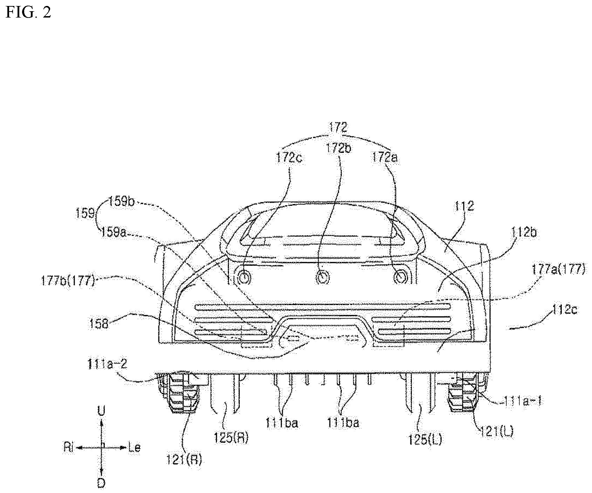

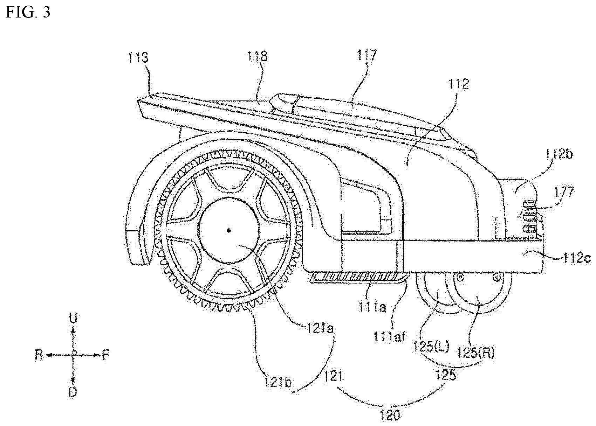

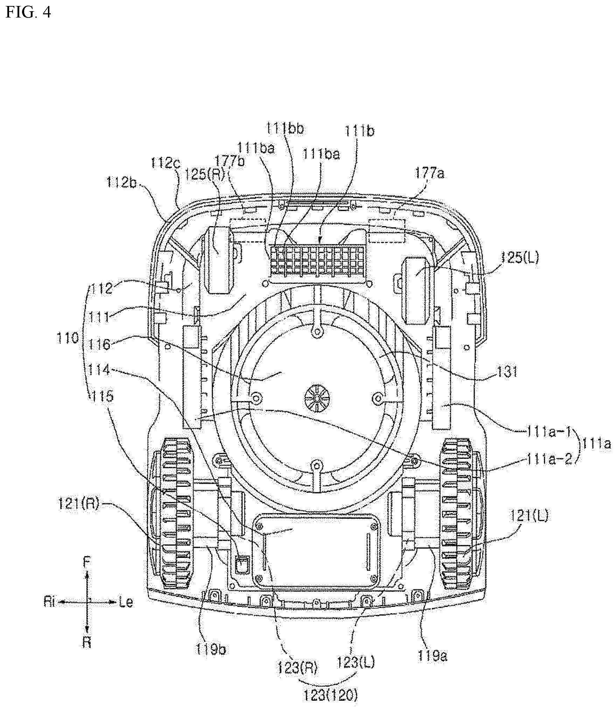

Hereinafter, a lawn mowing robot 100 of moving robots will be described as an example with reference to FIGS. 1 to 6, but the present disclosure is not limited thereto.

Referring to FIGS. 1 to 4, the moving robot 100 includes a body 110 which forms an appearance. The body 110 forms an interior space. The moving robot 100 includes a traveler 120 which moves the body 110 with respect to a traveling surface. The moving robot 100 includes an operator 130 which performs a predetermined work.

The body 110 includes a frame 111 to which the driving motor module 123 to be described later is fixed. A blade motor 132 to be described later is fixed to the frame 111. The frame 111 supports a battery to be described later. The frame 111 provides a skeleton structure which supports various other parts. The frame 111 is supported by an auxiliary wheel 125 and a driving wheel 121.

The body 110 includes a side blocking portion 111a for preventing a finger of a user from entering a blade 131 from both sides of the blade 131. The side blocking portion 111a is fixed to the frame 111. The side blocking portion 111a is disposed to protrude downward compared to a bottom surface of the other portion of the frame 111. The side blocking portion 111a is disposed to cover an upper portion of a space between the driving wheel 121 and the auxiliary wheel 125.

A pair of side blocking portions 111a-1 and 111a-2 are disposed right and left with the blade 131 therebetween. The side blocking portion 111a is disposed to be spaced apart at a predetermined distance from the blade 131.

A front surface 111af of the side blocking portion 111a is formed to be round. The front surface 11 1af forms a surface which is bent upward to be rounded forward from a bottom surface of the side blocking portion 111a. By using the shape of the front surface 111af, when the moving robot 100 moves forward, the side blocking portion 111a can easily ride over a lower obstacle below a predetermined reference.

The body 110 includes a front blocking portion 111b for preventing the finger of the user from entering the blade 131 in front of the blade 131. The front blocking portion 111b is fixed to the frame 111. The front blocking portion 111b is disposed to cover a portion of an upper portion of a space between the pair of auxiliary wheels 125L and 125R.

The front blocking portion 111b includes a protruding rib 111ba protruding downward compared to a bottom surface of the other portion of the frame 111. The protruding rib 11 1ba extends in a front-rear direction. An upper end portion of the protruding rib 111ba is fixed to the frame 111, and a lower end portion of the protruding rib 111ba forms a free end.

A plurality of protruding ribs 11 1ba may be spaced apart in a right-left direction. The plurality of protruding ribs 111ba may be disposed parallel to each other. A gap is formed between two adjacent protruding ribs 111ba.

A front surface of the protruding rib 111ba is formed to be round. The front surface of the protruding rib 11 1ba forms a surface which is bent upward to be rounded forward from a bottom surface of the protruding rib 111ba. By using the shape of the front surface of the protruding rib 111ba, when the moving robot 100 moves forward, the protruding rib 111ba 111a can easily ride over a lower obstacle below a predetermined reference.

The front blocking portion 111b includes an auxiliary rib 111bb to assist stiffness. The auxiliary rib 1 1 1bb for reinforcing stiffness of the front blocking portion 111b is disposed between upper end portions of the two adjacent protruding ribs 111ba. The auxiliary rib 111bb may be formed to protrude downward and extend in a lattice shape.

A caster (not illustrated) for rotatably supporting the auxiliary wheel 125 is disposed on the frame 111. The caster is rotatably disposed with respect to the frame 111. The caster is rotatably provided about a vertical axis. The caster is disposed below the frame 111. A pair of casters corresponding to the pair of auxiliary wheels 125 is provided.

The body 110 includes a case 112 which covers the frame 111 from above. The case 112 forms an upper surface and front/rear/left/right surfaces of the moving robot 100.

The body 110 may include a case connector (not illustrated) which fixes the case 112 to the frame 111. The case 112 may be fixed to an upper end of the case connector. The case connector may be disposed to be movable in the frame 111. The case connector may be disposed to be movable only in an up-down direction with respect to the frame 111. The case connector may be provided to be able to be movable only within a predetermined range. The case connector is movable integrally with the case 112. Accordingly, the case 112 is movable relative to the frame 111.

The body 110 includes a bumper 112b disposed in a front portion thereof. The bumper 112b absorbs an impact when the bumper 112b comes in contact with an external obstacle. In a front surface portion of the bumper 112b, a bumper groove is formed, which is recessed rearward and formed to be elongated in the right-left direction. A plurality of bumper grooves may be disposed spaced apart in the up-down direction. A lower end of the protruding rib 111ba is disposed at a lower position than a lower end of the auxiliary rib 111bb.

In the bumper 112b, a front surface and right and left surfaces are formed to be connected to each other. The front surface and the side surfaces of the bumper 112b are connected to each other to be rounded.

The body 110 may include a bumper auxiliary portion 112c which is disposed to surround an outer surface of the bumper 112b. The bumper auxiliary part 112c is coupled to the bumper 112b. The bumper auxiliary portion 112c surrounds a lower portion and lower portions of right and left sides of a front surface of the bumper 112b. The bumper auxiliary portion 112c may cover the front surface and lower half portions of the right and left sides of the bumper 112b.

A front end surface of the bumper auxiliary portion 112c is disposed in front of a front end surface of the bumper 112b. The bumper auxiliary portion 112c forms a surface protruding from a surface of the bumper 112b.

The bumper auxiliary portion 112c may be formed of a material which is advantageous for shock absorption, such as rubber. The bumper auxiliary part 112c may be formed of a flexible material.

The frame 111 may include a movable fixing portion (not illustrated) to which the bumper 112b is fixed.

The movable fixing portion may be disposed to protrude upward from the frame 111. The bumper 112b may be fixed to an upper end portion of the movable fixing portion.

The bumper 112b may be disposed to be movable within a predetermined range with respect to the frame 111. The bumper 112b is fixed to the movable fixing portion and can move integrally with the movable fixing portion.

The movable fixing portion may be disposed to be movable with respect to the frame 111. The movable fixing portion may be provided so that the movable fixing portion is rotatable within a predetermined range with respect to the frame 111 about a virtual rotation axis. Accordingly, the bumper 112b may be rotatably provided integrally with the movable fixing portion with respect to the frame 111.

The body 110 includes a handle 113. The handle 113 may be disposed on a rear side of the case 112.

The body 110 includes a battery input portion 114 through which a battery is taken in or out. The battery input portion 114 may be disposed on a bottom surface of the frame 111. The battery input unit 114 may be disposed on a rear side of the frame 111.

The body 110 includes a power switch 115 for turning on/off power of the moving robot 100. The power switch 115 may be disposed on the bottom surface of the frame 111.

The body 110 includes a blade protector 116 which covers a lower side of a central portion of the blade 131. The blade protector 116 is provided so that a blade of a centrifugal portion of the blade 131 is exposed, but the central portion of the blade 131 is covered.

The body 110 includes a first opening/closing unit 117 which opens and closes a portion where a height adjuster 156 and a height display 157 are disposed. The first opening and closing portion 117 is hinged to the case 112 and is provided to enable opening and closing operations. The first opening/closing portion 117 is disposed on an upper surface of the case 112.

The first opening/closing portion 117 is formed in a plate shape, and covers upper sides of the height adjuster 156 and the height display 157 in a closed state.

The body 110 includes a second opening/closing unit 118 for opening and closing a portion where a display module 165 and an input unit 164 are disposed. The second opening/closing unit 118 is hinged to the case 112 and is provided to enable opening and closing operations. The second opening/closing portion 118 is disposed on the upper surface of the case 112. The second opening/closing unit 118 is disposed behind the first opening/closing unit 117.

The second opening/closing unit 118 is formed in a plate shape, and covers the display module 165 and the input unit 164 in a closed state.

An openable angle of the second opening/closing unit 118 is preset to be smaller than an openable angle of the first opening/closing unit 117. Accordingly, even in an open state of the second opening/closing unit 118, the user can easily open the first opening/closing unit 117, and the user can easily operate the height adjuster 156. In addition, even in the open state of the second opening/closing unit 118, the user can visually check a content of the height display 157.

For example, the openable angle of the first opening/closing unit 117 may be provided to be about 80 to 90° based on the closed state. For example, an openable angle of the second opening/closing unit 118 may be provided to be about 45 to 60° based on the closed state.

In the first opening/closing unit 117, a rear end thereof is raised upward with a front end thereof as a center, and thus, the first opening/closing unit 117 is opened. Moreover, in the second opening/closing unit 118, a rear end thereof is raised upward with a front end thereof as a center, and thus, the second opening/closing unit 118 is opened. Accordingly, the user can open and close the first opening/closing unit 117 and the second opening/closing unit 118 from a rear side of the lawn mowing robot 100, which is a safe area even when the lawn mowing robot 100 moves forward. In addition, the opening operation of the first opening/closing unit 117 and the opening operation of the second opening/closing unit 118 may be prevented from interfering with each other.

The first opening/closing unit 117 may be provided to be rotatable with respect to the case 112, about a rotation axis extending in the right-left direction on the front end of the first opening/closing unit 117. The second opening/closing unit 118 may be provided to be rotatable with respect to the case 112, about a rotation axis extending in a right-left direction on the front end of the second opening/closing unit 118.

The body 110 may include a first motor housing 119a accommodating a first driving motor 123(L) therein, and a second motor housing 119b accommodating the second driving motor 123(R) therein. The first motor housing 119a may be fixed to a left side of the frame 111, and the second motor housing 119b may be fixed to a right side of the frame 111. A right end of the first motor housing 119a is fixed to the frame 111. A left end of the second motor housing 119b is fixed to the frame 111.

The first motor housing 119a is formed in a cylindrical shape forming a height from side to side. The second motor housing 119b is formed in a cylindrical shape forming a height from side to side.

The traveler 120 includes a drive wheel 121 which is rotated by a driving force of the drive motor module 123. The traveler 120 may include at least one pair of drive wheels 121 which is rotated by the driving force of the drive motor module 123. The driving wheel 121 includes a first wheel 121(L) and a second wheels 121(R) provided on the left and right sides so as to be independently rotatable. The first wheel 121(L) is disposed on the left side, and the second wheel 121(R) is disposed on the right side. The first wheel 121(L) and the second wheel 121(R) are spaced apart from side to side. The first wheel 121(L) and the second wheel 121(R) are disposed on a lower rear side of the body 110.

The first wheel 121(L) and the second wheel 121(R) are provided to be rotatable independently so that the body 110 can rotate and move forward with respect to the ground. For example, when the first wheel 121(L) and the second wheel 121(R) rotate at the same rotational speed, the body 110 may move forward with respect to the ground. For example, when the rotational speed of the first wheel 121(L) is faster than the rotational speed of the second wheel 121(R) or when a rotational direction of the first wheel 121(L) and a rotational direction of the second wheel 121(R) are different from each other, the body 110 may rotate with respect to the ground.

The first wheel 121(L) and the second wheel 121(R) may be formed larger than the auxiliary wheel 125. A shaft of the first driving motor 123 (L) may be fixed to a center portion of the first wheel 121(L), and a shaft of the second driving motor 123(R) may be fixed to a center portion of the second wheel 121(R).

The driving wheel 121 includes a wheel outer peripheral portion 121b which is in contact with the ground. For example, the wheel outer portion 121b may be a tire. A plurality of protrusions for increasing a frictional force with the ground may be formed on the wheel outer peripheral portion 121b.

The driving wheel 121 may include a wheel frame (not illustrated) which fixes the wheel outer peripheral portion 121b and receives power from the motor 123. The shaft of the motor 123 is fixed to a center portion of the wheel frame, and thus, a rotational force can be transmitted to the wheel frame. The wheel outer peripheral portion 121b is disposed to surround a periphery of the wheel frame.

The driving wheel 121 includes a wheel cover 121a covering an outer surface of the wheel frame. The wheel cover 121a is disposed in a direction opposite to a direction in which the motor 123 is disposed based on the wheel frame. The wheel cover 121a is disposed at the center portion of the wheel outer peripheral portion 121b.

The traveler 120 includes the driving motor module 123 which generates a driving force. The traveler 120 includes the drive motor module 123 which provides the driving force to the driving wheel 121. The driving motor module 123 includes the first driving motor 123(L) which provides the driving force to the first wheel 121(L), and the second driving motor 123(R) which provides the driving force to the second wheel 121(R). The first driving motor 123(L) and the second driving motor 123(R) may be disposed spaced apart from side to side. The first driving motor 123(L) may be disposed on a left side of the second driving motor 123(R).

The first driving motor 123(L) and the second driving motor 123(R) may be disposed on the lower portion of the body 110. The first driving motor 123(L) and the second driving motor 123(R) may be disposed at the rear portion of the body 110.

The first driving motor 123(L) may be disposed on a right side of the first wheel 121(L), and the second driving motor 123(R) may be disposed on a left side of the second wheel 121(R). The first driving motor 123(L) and the second driving motor 123(R) are fixed to the body 110.

The first driving motor 123 (L) is disposed inside the first motor housing 119a, and the motor shaft may protrude to the left. The second driving motor 123(R) is disposed inside the second motor housing 119b, and the motor shaft may protrude to the right.

In the present embodiment, the first wheel 121(L) and the second wheel 121(R) are directly connected to a rotating shaft of the first driving motor 123(L) and a rotating shaft of the second driving motor 123(R), respectively. However, a component such as a shaft may be connected to the first wheel 121(L) and the second wheel 121(R), a rotational force of the motors 123(L) and 123(R) may be transmitted to the wheels 121a and 120b via a gear or chain.

The traveler 120 may include the auxiliary wheel 125 which supports the body 110 together with the driving wheel 121. The auxiliary wheel 125 may be disposed in front of the blade 131. The auxiliary wheel 125 is a wheel which does not receive the driving force by the motor, and serves to assist the body 110 with respect to the ground. A caster supporting a rotating shaft of the auxiliary wheel 125 is coupled to the frame 111 to be rotatable about a vertical axis. The first auxiliary wheel 125(L) disposed on the left side and the second auxiliary wheel 125(R) disposed on the right side may be provided.

The operator 130 is provided to perform a predetermined work. The operator 130 is disposed on the body 110.

For example, the operator 130 may be provided to perform works such as cleaning or lawn mowing. As another example, the operator 130 may be provided to perform a work such as transporting an object or finding an object. As still another example, the operator 130 may perform a security function for detecting an external intruder or a dangerous situation.

In the present embodiment, the operator 130 is described as performing mowing. However, a type of a work to be performed by the operator 130 may be various, and need not be limited to the example of the description.

The operator 130 may include the blade 131 rotatably provided to mow the lawn. The operator 130 may include a blade motor 132 which provides a rotational force to the blade 131.

The blade 131 is disposed between the driving wheel 121 and the auxiliary wheel 125. The blade 131 is disposed on the lower portion of the body 110. The blade 131 is provided to be exposed from the lower side of the body 110. The blade 131 rotates around a rotation axis extending in an up-down direction to mow the lawn.

The blade motor 132 may be disposed in front of the first wheel 121(L) and the second wheel 121(R). The blade motor 132 is disposed in a lower portion of a central portion in an inner space of the body 110.

The blade motor 132 may be disposed behind the auxiliary wheel 125. The blade motor 132 may be disposed in the lower portion of the body 110. The rotational force of the motor shaft is transmitted to the blade 131 using a structure such as a gear.

The moving robot 100 includes a battery (not illustrated) which supplies power to the driving motor module 123. The battery provides power to the first driving motor 123(L). The battery provides power to the second driving motor 123(R). The battery may supply power to the blade motor 132. The battery may provide power to a controller 190, an azimuth sensor 176, and an output unit 165. The battery may be disposed on a lower side of a rear portion in the inner space of the body 110.

The moving robot 100 is provided to change a height of the blade 131 with respect to the ground, and thus, can change a mowing height of the grass. The moving robot 100 includes the height adjuster 156 for the user to change the height of the blade 131. The height adjuster 156 may include a rotatable dial, and the dial is rotated to change the height of the blade 131.

The moving robot 100 includes the height display 157 which displays a level of the height of the blade 131. When the height of the blade 131 is changed according to an operation of the height adjuster 156, the height level displayed by the height display 157 is also changed. For example, the height display 157 may display a predicted height value of the lawn after the moving robot 100 performs lawn mowing with a current height of the blade 131.

The moving robot 100 includes a docking insertion 158 which is connected to a docking device 200 when the moving robot 100 docks with the docking device 200. The docking insertion 158 is provided to be recessed to be inserted into the docking connector 210 of the docking device 200. The docking insertion 158 is disposed on the front surface portion of the body 110. The moving robot 100 can be correctly guided when being charged by the connection of the docking insertion 158 and the docking connector 210.

The moving robot 100 may include a charging corresponding terminal 159 disposed at a position contactable with a charging terminal 211 to be described later in a state where the docking insertion 158 is inserted into the docking connector 210. The charging corresponding terminal 159 may include a pair of charging corresponding terminals 159a and 159b disposed at positions corresponding to the pair of charging terminals 211 (211a and 211b). The pair of charging correspondence terminals 159a and 159b may be disposed left and right in a state where the docking insertion portion 158 is interposed therebetween.

A terminal cover (not illustrated) may be provided to cover the docking insertion 158 and the pair of charging terminals 211 (211a, 211b) so as to be opened and closed. When the moving robot 100 travels, the terminal cover may cover the docking insertion 158 and the pair of charging terminals 211 (211a and 211b). When the moving robot 100 is connected to the docking device 200, the terminal cover is opened, and the docking insertion 158 and the pair of charging terminals 211 (211a and 211b) may be exposed.

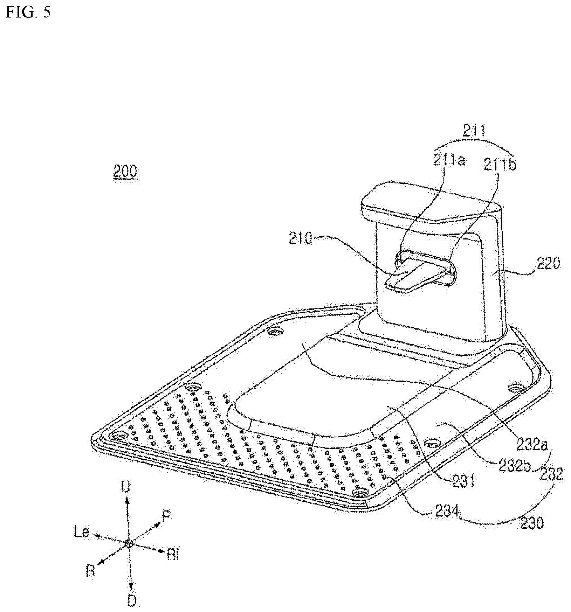

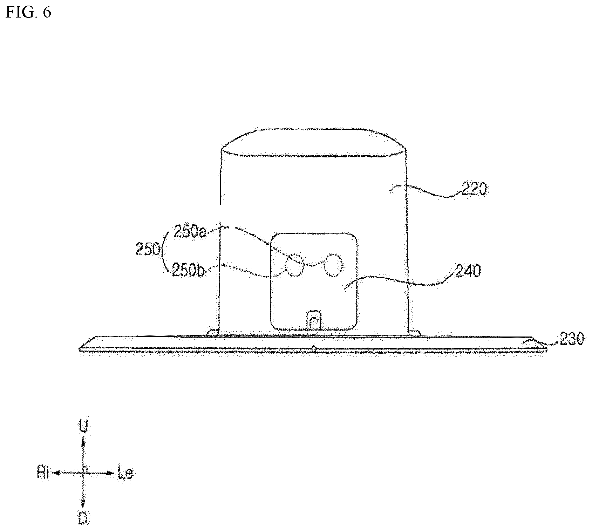

Meanwhile, referring to FIGS. 5 and 6, the docking device 200 includes a docking base 230 disposed on the floor and a docking support 220 protruding upwardly from a front portion of the docking base 230.

The docking base 230 defines a surface parallel in a horizontal direction. The docking base 230 has a plate shape so that the moving robot 100 can be seated. The docking support 220 extends from the docking base 230 in a direction intersecting the horizontal direction.

The moving robot 100 includes the docking connector 210 which is inserted into the docking insertion 158 when the moving robot 100 is charged. The docking connector 210 protrude rearward from the docking support 220.

The docking connector 210 may have a thickness in the up-down direction smaller than a width in the right-left direction. The width of the docking connector 210 in the right-left direction may narrowed rearward. When viewed from above, a shape of the docking connection 210 is trapezoidal in whole. The docking connector 210 is formed in a right and left symmetrical shape. A rear portion of the docking connector 210 forms a free end, and a front portion of the docking connector 210 is fixed to the docking support 220. The rear portion of the docking connector 210 may be formed in a rounded shape.

When the docking connector 210 is completely inserted into the docking insertion 158, the moving robot 100 may be charged by the docking device 200.

The docking device 200 includes the charging terminal 211 for charging the moving robot 100. The charging terminal 211 and the charging corresponding terminal 159 of the moving robot 100 come into contact with each other, and thus, power for charging may be supplied from the docking device 200 to the moving robot 100.

The charging terminal 211 includes a contact surface facing the rear side, and the charging corresponding terminal 159 includes a contact corresponding surface facing the front side. The contact surface of the charging terminal 211 and the contact corresponding surface of the charging corresponding terminal 159 come into contact with each other, and thus, the power of the docking device 200 is connected to the moving robot 100.

The charging terminal 211 may include the pair of charging terminals 211 (211a and 211b) forming positive and negative poles. The first charging terminal 211a is provided to come into contact with the first charging terminal 159a, and the second charging terminal 211b is provided to come into contact with the second charging terminal 159b.

The pair of charging terminals 211a and 211b may be disposed in a state where the docking connector 210 is interposed therebetween. The pair of charging terminals 211a and 211b may be disposed on right and left of the docking connector 210.

The docking base 230 includes a wheel guard 232 on which the driving wheel 121 and the auxiliary wheel 125 of the moving robot 100 ride. The wheel guard 232 includes a first wheel guard 232a which guides a movement of the first auxiliary wheel 125 and a second wheel guard 232b which guides a movement of the second auxiliary wheel 125. An upper convex center base 231 is disposed between the first wheel guard 232a and the second wheel guard 232b. The docking base 230 includes a slip prevention 234 for preventing slipping of the first wheel 121(L) and the second wheel 121(R). The slip prevention 234 may include a plurality of protrusions protruding upward.

Meanwhile, a boundary wire 290 for setting a boundary of a traveling area of the moving robot 100 may be implemented. The boundary wire 290 may generate a predetermined boundary signal. The moving robot 100 may detect a boundary signal and recognize a boundary of the traveling area set by the boundary wire 290.

For example, a predetermined current flows along the boundary wire 290 to generate a magnetic field around the boundary wire 290. Here, the generated magnetic field is a boundary signal. An AC current having a predetermined change pattern may flow through the boundary wire 290 so that the magnetic field generated around the boundary wire 290 may be changed to have a predetermined change pattern. The moving robot 100 can recognize that the moving robot 100 approaches the boundary wire 290 within a predetermined distance using a boundary signal detector 177 which detects the magnetic field, and thus, the moving robot 100 can travel only the traveling area within the boundary set by the boundary wire 290.

The boundary wire 290 may generate a magnetic field in a direction different from a reference wire 270. For example, the boundary wire 290 may be disposed substantially parallel to the horizontal plane. Here, the "substantially parallel" can include parallelism in an engineering sense, including complete parallelism in a mathematical sense and a certain level of error.

The docking device 200 may serve to transmit a predetermined current to the boundary wire 290. The docking device 200 may include a wire terminal 250 connected to the boundary wire 290. Both ends of the boundary wire 290 may be connected to a first wire terminal 250a and a second wire terminal 250b, respectively. When the boundary wire 290 and the wire terminal 250 are connected to each other, the power of the docking device 200 can supply a current to the boundary wire 290.

The wire terminal 250 may be disposed at a front portion F of the docking device 200. That is, the wire terminal 250 may be disposed on a side opposite to a direction in which the docking connector 210 protrudes. The wire terminal 250 may be disposed on the docking support 220. The first wire terminal 250a and the second wire terminal 250b may be disposed spaced apart from side to side.

The docking device 200 may include a wire terminal opening/closing portion 240 which covers the wire terminal 250 so that the wire terminal 250 can be opened or closed. The wire terminal opening/closing portion 240 may be disposed at the front portion F of the docking support 220. The wire terminal opening/closing portion 240 is hinged to the docking support 220 and may be preset to perform an opening/closing operation when the wire terminal opening/closing portion 240 is rotated.

Meanwhile, the reference wire 270 for recognizing the position of the docking device 200 to the moving robot 100 may be implemented. The reference wire 270 may generate a predetermined docking position signal.

The moving robot 100 detects the docking position signal, recognizes the position of the docking device 200 by the reference wire 270, and may return to the recognized position of the docking device 200 when a return command or charging is required. The position of the docking device 200 may be a reference point of the traveling of the moving robot 100.

The reference wire 270 is formed of a conductive material through which electricity can flow. The reference wire 270 may be connected to the power supply of the docking device 200 to be described later.

For example, a magnetic field may be generated around the reference wire 270 by causing a predetermined current to flow along the reference wire 270. Here, the generated magnetic field is the docking position signal. By allowing an alternating current having a predetermined change pattern to flow through the reference wire 270, a magnetic field generated around the reference wire 270 may change with a predetermined change pattern. The moving robot 100 can recognize that the moving robot 100 is close to the reference wire 270 within a predetermined distance by using the boundary signal detector 177 which detects the magnetic field, and accordingly, the moving robot 100 can return to the position of the docking device 200 set by the reference wire 270.

The reference wire 270 may generate the magnetic field in a direction distinct from the boundary wire 290. For example, the reference wire 270 may extend in a direction intersecting the horizontal direction. Preferably, the reference wire 270 may extend in the up-down direction orthogonal to the horizontal direction.

The reference wire 270 may be installed on the docking device 200. The reference wire 270 may be disposed at various positions in the docking device 200.

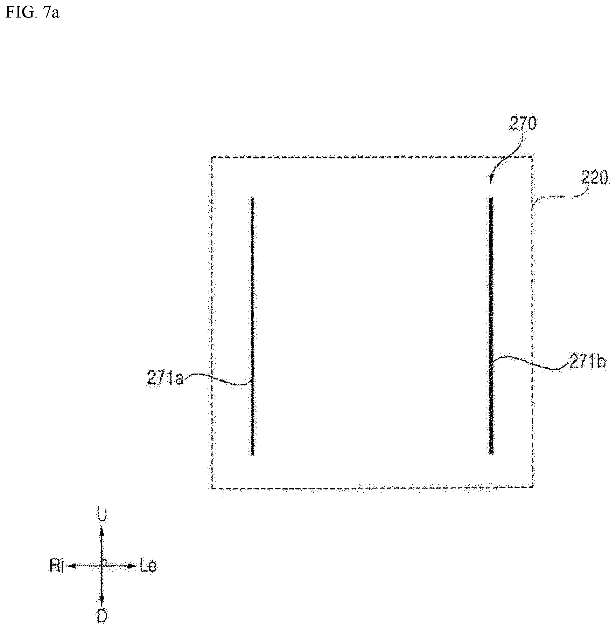

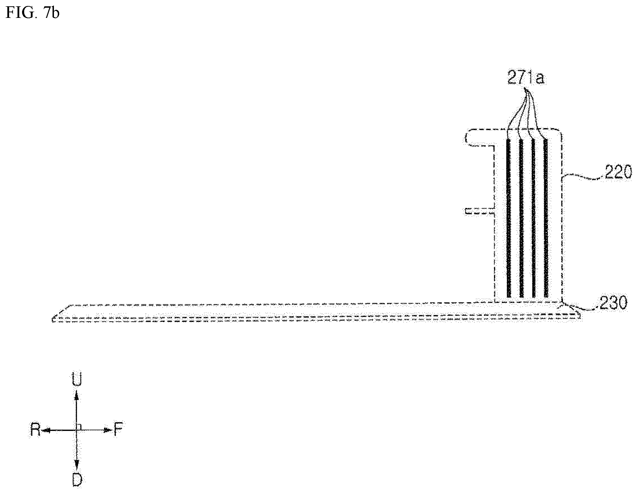

FIG. 7a is a view when the reference wire 270 according to an embodiment of the present disclosure is viewed from the rear, and FIG. 7b is a view when the reference wire 270 according to the embodiment of the present disclosure is viewed from one side.

With reference to FIGS. 6, 7a, and 7b, the reference wire 270 according to the embodiment may be disposed inside the docking support 220. Since the reference wire 270 needs to generate a magnetic field signal in the horizontal direction, the reference wire 270 is disposed to extend in the vertical direction. When the reference wire 270 is disposed on the docking base 230, there is a disadvantage that a thickness of the docking base 230 becomes very thick.

The reference wire 270 may include at least a vertical portion 271 extending in a direction intersecting the horizontal direction. The vertical portion 271 may be disposed substantially in parallel with the up-down direction UD.

A direction of electricity input into the vertical portion 271 of the reference wire 270 may proceed from the top to the bottom or from the bottom to the top.

A plurality of vertical portions 271 may be disposed in order to generate the docking position signal more than a certain level in the entire peripheral area of the docking device 200. For example, the vertical portion 271 may include a first vertical portion 271a and a second vertical portion 271b which is disposed to be spaced apart from the first vertical portion 271a. Of course, the vertical portion 271 may include only one of the first vertical portion 271a and the second vertical portion 271b.

The first vertical portion 271a and the second vertical portion 271b are disposed to be spaced apart in the right-left direction. The first vertical portion 271a may be disposed adjacent to a right end of the docking support 220, and the second vertical portion 271b may be disposed adjacent to a left end of the docking support 220. When the first vertical portion 271a and the second vertical portion 271b are disposed adjacent to both ends of the docking support 220, an area in which the magnetic field is generated by the reference wire 270 is expanded as far as possible around the docking device 200.

The first vertical portion 271a and the second vertical portion 271b may have the same or different directions of current. Preferably, when electricity flows from the top to the bottom in the first vertical portion 271a, electricity may flow in the second vertical portion 271b from the bottom to the top.

In order to reinforce the strength of the electric field of the first vertical portion 271a and the second vertical portion 271b, a plurality of first vertical portions 271a and a plurality of second vertical portions 271b may be provided, respectively. Each of the first vertical portion 271a and the second vertical portion 271b may be an assembly of several wires, and the first vertical portion 271a and the second vertical portion 271b may have a certain arrangement. Of course, one first vertical portion 271a and one second vertical portion 271b may be disposed.

For example, a plurality of first vertical portions 271a may be disposed in a row along a line extending in the front-rear direction, and a plurality of second vertical portions 271b may be disposed in a row along a line extending in the front-rear direction.

When the plurality of first vertical portions 271a and the second vertical portions 271b are disposed at both ends of the docking support 220 in the right-left direction and disposed in rows in the front-rear direction, the charging terminal 211 and the docking connector 210 may be disposed between the plurality of first vertical portions 271a and the second vertical portion 271b. When the charging terminal 211 and the docking connector 210 are disposed between the plurality of first vertical portions 271a and the plurality of second vertical portions 271b, there is an advantage in that the reference wire 270 can be disposed without changing configurations of the charging terminal 211 and the docking connector 210.

The plurality of first vertical portions 271a and the plurality of second vertical portions 271b may be electrically connected to each other or may receive electricity from a separate power source. The docking device 200 may serve to send a predetermined current to the reference wire 270. The docking device 200 may include the wire terminal 250 connected to the reference wire 270. Both ends of the reference wire 270 may be connected to the first wire terminal 250a and the second wire terminal 250b, respectively. Through the connection between the reference wire 270 and the wire terminal 250, the power of the docking device 200 may supply current to the reference wire 270.

Specifically, both ends of the plurality of first vertical portions 271a may be connected to the first wire terminal 250a and the second wire terminal 250b, respectively, and both ends of the plurality of second vertical portions 271b may be connected to the first wire terminal 250a and the second wire terminal 250b, respectively.

Of course, the reference wire 270 according to another example may further include a horizontal portion (not illustrated). In this case, the reference wire 270 may have a structure in which the first vertical portion 271a and the second vertical portion 271b are connected to each other to receive power from one power source.

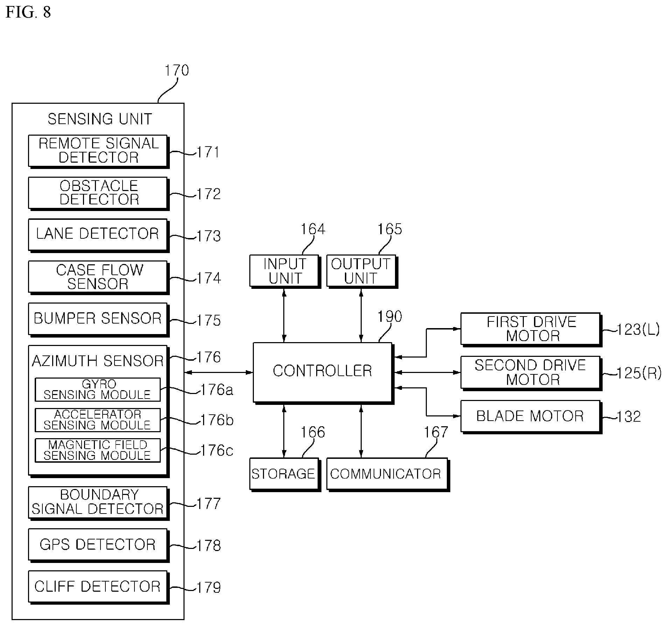

FIG. 8 is a block diagram illustrating a control relationship of the moving robot 100 of FIG. 1.

Meanwhile, the moving robot 100 may include the input unit 164 capable of inputting various instructions of the user. The input unit 164 may include a button, a dial, and a touch-type display. The input unit 164 may include a microphone (not illustrated) for speech recognition. In the present embodiment, a plurality of buttons are disposed on an upper portion of the case 112.

The moving robot 100 may include the output unit 165 which outputs various information to the user. The output unit 165 may include a display module which outputs visual information. The output unit 165 may include a speaker (not illustrated) which outputs auditory information.

In the present embodiment, the display module 165 outputs an image upward. The display module 165 is disposed on the upper portion of the case 112. As an example, the display module 165 may include a thin film transistor liquid-crystal display (LCD) panel. In addition, the display module 165 may be implemented using various display panels such as a plasma display panel or an organic light emitting diode display panel.

The moving robot 100 includes a storage 166 for storing various information. The storage 166 records various information required for the control of the moving robot 100, and may include a volatile or nonvolatile recording medium. The storage 166 may store information input from the input unit 164 or received by a communicator 167. A program for controlling the moving robot 100 may be stored in the storage 166.

The moving robot 100 may include the communicator 167 for communicating with an external device (terminal or the like), a server, a router, or the like. For example, the communicator 167 may be implemented to wirelessly communicate with wireless communication technologies such as IEEE 802.11 WLAN, IEEE 802.15 WPAN, UWB, Wi-Fi, Zigbee, Z-wave, and Blue-Tooth. The communicator may be changed depending on the communication method of another device or a server.

The moving robot 100 includes a sensing unit 170 which senses information related to a state of the moving robot 100 or an environment outside the moving robot 100. The sensing unit 170 may be include at least one of a remote signal detector 171, an obstacle detector 172, a rain detector 173, a case movement sensor 174, and a bumper sensor 175, includes azimuth sensor 176 and boundary signal detector 177, and may include at least one of a GPS detector 178 and a cliff detector 179.

The remote signal detector 171 receives an external remote signal. When the remote signal is transmitted by an external remote controller, the remote signal detection unit 171 may receive the remote signal. For example, the remote signal may be an infrared signal. The signal received by the remote signal detector 171 may be processed by the controller 190.

A plurality of remote signal detector 171 may be provided. The plurality of remote signal detectors 171 include a first remote signal detection unit 171a disposed on the front portion of the body 110 and a second remote signal detection unit 171b disposed on the rear portion of the body 110. The first remote signal detector 171a receives a remote signal transmitted from the front. The second remote signal detector 171b receives a remote signal transmitted from the rear.

The obstacle detector 172 detects an obstacle around the moving robot 100. The obstacle detector 172 may detect an obstacle in front. A plurality of obstacle detectors 172a, 172b, and 172c may be provided. The obstacle detector 172 is disposed on the front surface of the body 110. The obstacle detector 172 is disposed above the frame 111. The obstacle detector 172 may include an infrared sensor, an ultrasonic sensor, an RF sensor, a geomagnetic sensor, a Position Sensitive Device (PSD) sensor, or the like.

The rain detector 173 detects rain when rain occurs in an environment where the moving robot 100 is placed. The rain detector 173 may be disposed in the case 112.

The case movement sensor 174 detects the movement of the case connector. When the case 112 is raised upward with respect to the frame 111, the case connector moves upward, and the case movement sensor 174 detects that the case 112 is raised. When the case movement sensor 174 detects that the case 112 is raised, the controller 190 may control to stop the operation of the blade 131. For example, when the user raises the case 112 or a situation in which the case 112 is raised by a lower obstacle having a significant size occurs, the case movement sensor 174 may detect this.

The bumper sensor 175 can detect a rotation of the movable fixing portion. For example, a magnet may be disposed on one side of the lower portion of the movable fixing portion, and a sensor which detects a change in the magnetic field of the magnet may be disposed on the frame 111. When the movable fixing portion rotates, the sensor detects the change in the magnetic field of the magnet, and thus, the bumper sensor 175 which detects the rotation of the movable fixing portion can be implemented. When the bumper 112b collides with an external obstacle, the movable fixing portion rotates integrally with the bumper 112b. The bumper sensor 175 may detect the rotation of the movable fixing portion, and thus, detect an impact of the bumper 112b.

The sensing unit 20 includes a slope information acquirer 180 which acquires slope information on a slope of the traveling surface S. The slope information acquirer180 may acquire slope information on the slope of the traveling surface S on which the body 110 is mounted by sensing the slope of the body 110. For example, the slope information acquirer 80 may include a gyro sensing module 176a. The slope information acquirer 180 may include a processing module (not illustrated) for converting a detection signal of the gyro sensing module 176a into slope information. The processing module is a portion of the controller 190 and may be implemented as an algorithm or program. As another example, the slope information acquirer180 may include the magnetic field sensing module 176c to obtain the slope information based on sensing information on a magnetic field of the Earth.

A gyro sensing module 176a may acquire information on a rotational angular velocity with respect to a horizontal surface of the body 30. Specifically, the gyro sensing module 176a may detect the rotational angular speed about X and Y axes which are parallel to the horizontal surface and are perpendicular to each other. The rotational angular velocity about the horizontal surface can be calculated by synthesizing the rotational angular velocity (roll) about the X axis and the rotational angular velocity (pitch) about the Y axis through a processing module. The rotational angular velocity can be integrated through the processing module to calculate a slope value.

The gyro sensing module 176a may detect a predetermined reference direction. The slope information acquirer 180 may acquire slope information based on the reference direction.

The azimuth sensor (AHRS) 176 may have a gyro sensing function. The azimuth sensor 176 may further include an acceleration sensing function. The azimuth sensor 176 may further include a magnetic field sensing function.

The azimuth sensor 176 may include a gyro sensing module 176a which performs gyro sensing. The gyro sensing module 176a may detect the horizontal rotational speed of the body 110. The gyro sensing module 176a may detect a tilting speed with respect to the horizontal surface of the body 110.

The gyro sensing module 176a may include a gyro sensing function for three axes of a spatial coordinate system orthogonal to each other. The information collected by the gyro sensing module 176a may be roll, pitch, and yaw information. The processing module can calculate direction angles of the cleaners 1 and 1' by integrating the angular velocities of rolling, pitching, and yaw.

The azimuth sensor 176 may include an acceleration sensing module 176b which performs acceleration sensing. The acceleration sensing module 176b may have an acceleration sensing function for the three axes of the spatial coordinate system orthogonal to each other. A given processing module can calculate the speed by integrating the acceleration, and can calculate a moving distance by integrating the speed.

The azimuth sensor 176 may include a magnetic field sensing module 176c which performs magnetic field sensing. The magnetic field sensing module 176c may have a magnetic field sensing function for three axes of a spatial coordinate system orthogonal to each other. The magnetic field sensing module 176c may detect the magnetic field of the Earth.

The boundary signal detector 177 detects the boundary signal of the boundary wire 290 or/and the docking position signal of the reference wire 270.

The boundary signal detector 177 may be disposed in the front portion of the body 110. Accordingly, it is possible to detect the boundary of the traveling area early while moving forward, which is a main traveling direction of the moving robot 100. The boundary signal detector 177 may be disposed in an inner space of the bumper 112b.

The boundary signal detector 177 may include a first boundary signal detector 177a and a second boundary signal detector 177b which are spaced apart from side to side. The first boundary signal detector 177a and the second boundary signal detector 177b may be disposed in the front portion of the body 110.

For example, the boundary signal detector 177 includes a magnetic field sensor. The boundary signal detector 177 may be implemented using a coil to detect a change in a magnetic field. The boundary signal detector 177 may detect a magnetic field in at least a horizontal direction. The boundary signal detector 177 may detect a magnetic field with respect to three axes which are orthogonal to each other in space.

Specifically, the first boundary signal detector 177a may detect a magnetic field signal in a direction orthogonal to the second boundary signal detector 177b. The first boundary signal detector 177a and the second boundary signal detector 177b may detect magnetic field signals in directions orthogonal to each other, and combine the detected magnetic field signal values to detect the magnetic field with respect to the three axes orthogonal to each other in the space.

When the boundary signal detector 177 detects the magnetic field with respect to the three axes which are orthogonal to each other in space, the direction of the magnetic field is determined by a sum vector value of the three axes, and if the direction of the magnetic field is close to the horizontal direction, the docking position signal can be recognized, and if the direction of the magnetic field is close to the vertical direction, the boundary signal can be recognized.

Further, the boundary signal detector 177 may distinguish between an adjacent boundary signal and boundary signals of a first traveling area A1 and a second traveling area A2 by a difference in an intensity of the magnetic field, and may distinguish the adjacent boundary signal and the docking position signal by a difference in direction of the magnetic field. Specifically, when at least some or all of a first boundary wire 291 of the first traveling area A1 and a second boundary wire 292 of the second traveling area A2 overlap each other, and current is applied in the same direction, a magnetic field having a greater intensity than the magnetic field generated in each of the first boundary wire 291 and the second boundary wire 292 is generated, and each signal can be distinguished by a difference in intensity of the magnetic field.

As another example, the boundary signal detector 177 may distinguish between the adjacent boundary signal and the boundary signals of the first traveling area A1 and the second traveling area A2 by a difference in a magnetic field distribution. Specifically, when a portion of the first boundary wire 291 of the first traveling area A1 and the second boundary wire 292 of the second traveling area A2 are disposed within a certain distance and the current is applied in the same direction or different directions, the boundary signal detector 177 may detect that the intensity of the magnetic field has a plurality of peaks within a predetermined distance on plane coordinates and recognize the signal as the adjacent boundary signal.

The GPS detector 178 may be provided to detect a Global Positioning System (GPS) signal. The GPS detector 178 may be implemented using a PCB.

The cliff detection unit 179 detects the presence of a cliff on the traveling surface. The cliff detection unit 179 is disposed in the front portion of the body 110 and can detect the presence or absence of a cliff in front of the moving robot 100.

The sensing unit 170 may include an opening/closing detector (not illustrated) which detects whether at least one of the first opening/closing unit 117 and the second opening/closing unit 118 is opened or closed. The opening/closing detector may be disposed in the case 112.

The moving robot 100 includes the controller 190 which controls autonomous traveling. The controller 190 may process a signal of the sensing unit 170. The controller 190 can process a signal of the input unit 164.

The controller 190 may control the driving of the first driving motor 123(L) and the second driving motor 123(R). The controller 190 may control the driving of the blade motor 132. The controller 190 can control the output of the output unit 165.

The controller 190 includes a main board (not illustrated) disposed in the inner space of the body 110. The main board means a PCB.

The controller 190 may control the autonomous driving of the moving robot 100. The controller 190 may control the driving of the traveler 120 based on the signal received from the input unit 164. The controller 190 may control the driving of the traveler 120 based on the signal received from the sensing unit 170.

In addition, the controller 190 may process the signal of the boundary signal detector 177.

Specifically, when the boundary signal detector 177 detects the docking position signal, the controller 190 may set the position at which the docking position signal is detected as the reference point. When a command to return to the reference point determined by the docking position signal is input, the controller 190 may cause the moving robot 100 to travel the reference point.

In addition, when the boundary signal detector 177 detects the boundary signal, the controller 190 may set the position at which the boundary signal is detected as the boundary of the traveling area. The controller 190 can travel the moving robot 100 within the boundary of the traveling area.

Hereinafter, pattern traveling and a direction angle used in the present specification will be defined.

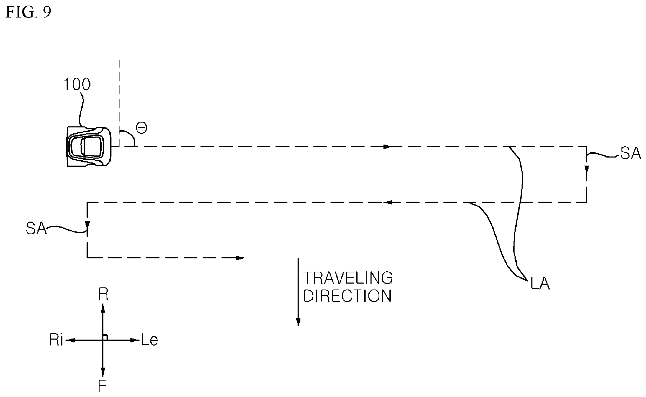

FIG. 9 is a view illustrating a pattern traveling of the moving robot according to an embodiment of the present disclosure.

Referring to FIG. 9, the pattern traveling may mean that traveling is repeated in which the moving robot 100 linearly travels along a set long axis LA, changes a traveling direction to a direction intersecting the long axis LA at one end of the long axis LA, linearly travels a short axis SA set shorter than the long axis LA, changes the traveling direction to the direction intersecting the short axis SA at one end of the short axis SA, and travels by the set long axis LA. Here, it is preferable that an angle between the long axis LA and the short axis SA is 88° to 92°. It is preferable that a plurality of long axes LA are parallel to each other, and a plurality of short axes SA are parallel to each other. Of course, the long axis LA and the short axis SA do not mean a straight line in a mathematical sense, but a concept including a curve close to a straight line.

Moreover, the pattern traveling may mean that traveling is repeated in which when the moving robot 100 linearly travels along the set long axis LA until the obstacle emerges or the moving robot 100 meets the boundary of the traveling area and the moving robot 100 meets the obstacle or the boundary of the traveling area, changes the traveling direction to the direction intersecting the long axis LA to linearly travel along the short axis SA set to be shorter than the long axis LA, and changes the traveling direction to the direction intersecting the short axis SA by about 90° at one end of the short axis SA to travel along the set long axis LA until the obstacle emerges or the moving robot meets the obstacle.

Here, the direction of the short axis SA is the traveling direction, and the direction of the long axis LA becomes a direction angle (θ1) direction of the pattern traveling. Here, lengths of the long axis LA and the short axis SA are not limited. However, preferably, the length of the long axis LA is set to 20 to 30 meters, and the length of the short axis SA is set to 0.5 times to 2 times the length of the body.

Here, the direction angle means an angle formed by the long axis LA and a reference line ST. The direction angle is measured clockwise from the reference line ST. Here, the reference line ST and a measurement direction may be changed. For example, in FIG. 9, the direction angle of the pattern traveling is 90°, and the traveling direction is from the rear to the front. The direction angle of the traveling direction is 180°.

The direction angle and a progress direction angle may be calculated as a sensing value of the azimuth sensor 176, and a movement distance of the moving robot may be calculated as a sensing value of the azimuth sensor 176 and the GPS detector 178.

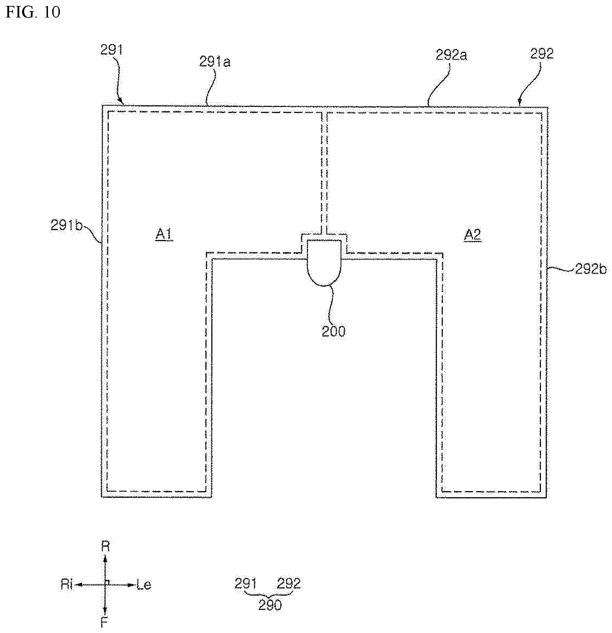

FIG. 10 illustrates the traveling area including the traveling area defined by the wire, the first traveling area A1, and the second traveling area A2.

The moving robot maps the traveling area when traveling along the boundary signal of the wire. The controller 190 may define the traveling area based on the boundary signal and may divide the traveling area into a plurality of traveling areas including at least the first traveling area A1 and the second traveling area A2. Here, as a method of dividing the traveling area into the plurality of traveling areas, various methods may be used.

For example, as illustrated in FIG. 10, the traveling area may be divided into the first traveling area A1 and the second traveling area A2. Here, the boundary wire 290 may include a first boundary wire 291 defining a portion of the boundary of the first traveling area A1 and a second boundary wire 292 defining a portion of the boundary of the first traveling area A1.

When a position correction of the moving robot 100 is required while the moving robot 100 travels in the traveling area, the controller 190 controls the moving robot 100 to reset the position of the moving robot 100 based on the position of the docking device 200 after the moving robot moves to the docking device 200. Therefore, by periodically correcting the position of the moving robot 100, it is possible to acerating a correct position of the moving robot 100, and accurately control the traveling of the moving robot 100.

Here, when the position correction of the moving robot 100 is required is when a preset time elapses from a traveling start of the moving rob 100.

In addition, when the position correction of the moving robot 100 is required, an error between a position of the moving robot 100 on a map and an actual position of the moving robot 100 may be out of a preset range. Here, the actual position of the moving robot 100 is a position calculated by various sensors and boundary signals.

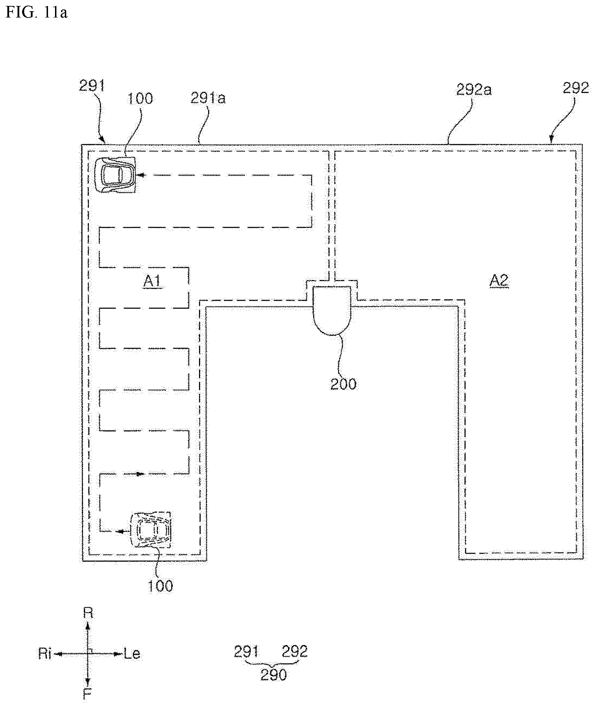

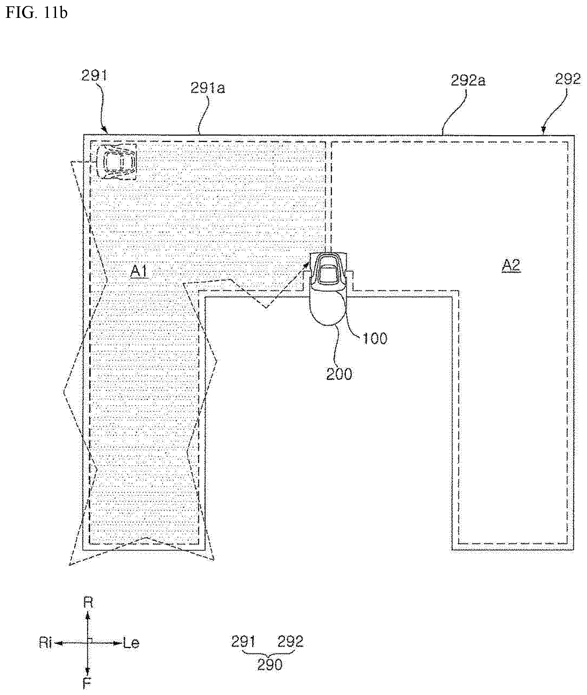

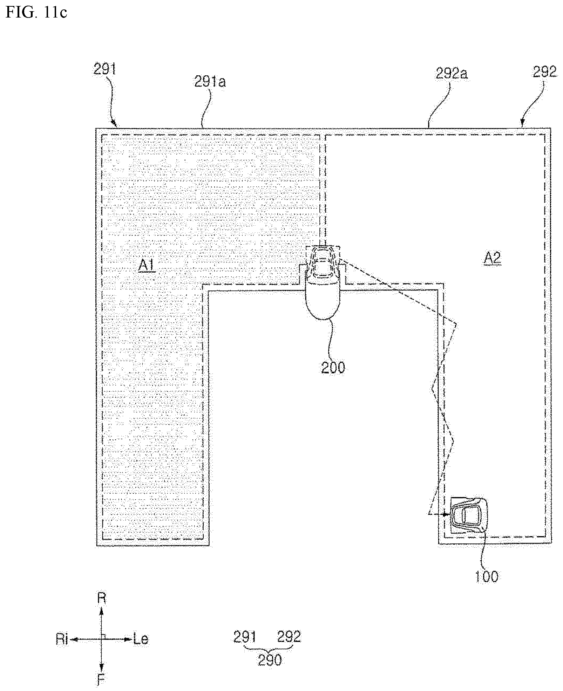

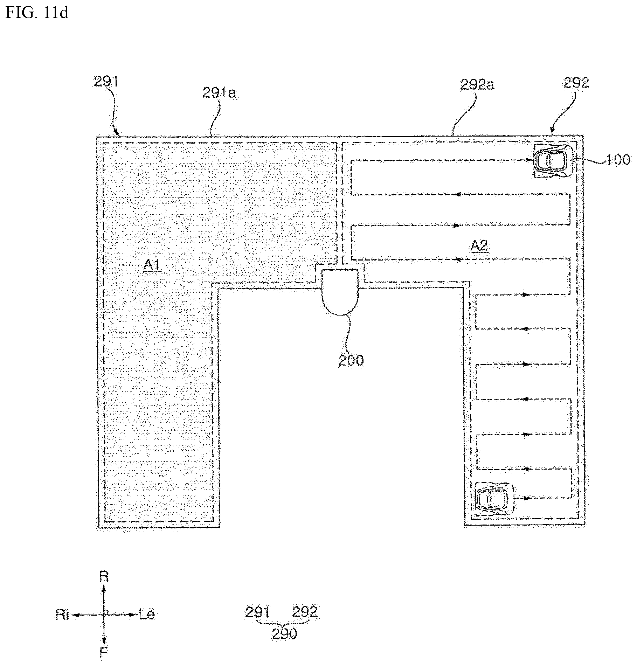

Hereinafter, referring to FIG. 11, it will be described that the case where the position correction of the moving robot 100 is required is when the moving robot 100 completes the traveling of the first traveling area A1.

Figs. 11a to 11d are views illustrating a traveling method of the moving robot 100 according to the first example of the present disclosure. Specifically, FIG. 11 illustrates that after the moving robot 100 completes the traveling in the first traveling area A1, the moving robot 100 returns to the docking device, resets the position of the moving robot 100, and travels the second traveling area A2.

Referring to FIG. 11a, the controller 190 controls the traveler so that the moving robot 100 perform first pattern traveling in the first traveling area A1 at a first direction angle. Specifically, the controller 190 controls the moving robot so that the moving robot moves from the charging station to a traveling starting point of the first traveling area A1 along the boundary wire 290. Here, the traveling starting point of the first traveling area A1 is a position in which a curvature value of the wire is equal to or less than a preset value and efficient pattern traveling is possible considering the shape of the first traveling area A1. More specifically, in the present disclosure, the traveling starting point of the first traveling area A1 may be a center of a lower end portion 291c of the boundary wire 290 which is located at a lower end of the first traveling area A1 and is disposed parallel to the right-left direction.

The controller 190 defines that the moving robot 100 performs the first pattern traveling from the traveling starting point of the first traveling area (A1) at the first direction angle. Specifically, the first direction angle h of the first pattern traveling may be 88° to 92°, and the progress direction angle of the first pattern traveling may be 358° to 2°. The moving robot 100 may perform pattern traveling in the first traveling area A1 in a state where the right-left direction is set to the major axis LA and the up-down direction is set to the minor axis SA direction.

For efficient pattern traveling, the first direction angle can be calculated parallel to the boundary of the traveling area adjacent to the traveling starting point of the first pattern traveling. Specifically, the controller 190 may calculate the first direction angle parallel to the lower end portion 291c of the boundary wire 290.

When the controller 190 completes the traveling of the first traveling area A1, the controller 190 may control the traveler 120 to perform a second pattern traveling. Here, completion of the traveling of the first traveling area A1 means that a total movement distance of the moving robot 100 in the traveling direction reaches a preset value, or the boundary of the first traveling area A1 is adjacent in front of the moving robot 100 in the traveling direction.

Specifically, as illustrated in FIG. 11a, when the moving robot 100 moves in the minor axis SA direction, in a case where the moving robot is within a certain distance from the upper end portion 291a of the boundary wire of the first traveling area A1, the controller 190 may determine that the traveling of the first traveling area A1 has been completed.

Referring to FIG. 11b, the moving robot 100 moves to the docking device 200 when the position correction is required. Since the moving robot 100 cannot recognize the exact current position on the map, the moving robot 100 moves along the boundary signal when moving to the docking device. Specifically, when the moving robot 100 moves to the docking device, the controller 190 may control the traveler 120 so that the moving robot moves along a boundary signal.

More specifically, when the position correction is required, the moving robot 100 moves to the wire 290 closest to the moving robot 100 after stopping the traveling, and thereafter, detects the docking device while moving along the wire 290.

When the moving robot 100 moves to the docking device, in a case where the moving robot 100 repeatedly travels along the boundary line 290, the ground is dug due to the repeated traveling, and thus, the moving robot 100 may travel a random traveling path while traveling along the boundary line 290.

Specifically, when the moving robot 100 moves to the docking device, the controller 190 controls the traveler 120 so that the body changes the traveling direction by a random number of times within a homing traveling area set as the central axis of the boundary line 290. Here, the homing traveling area may be defined as a closed area with the boundary line 290 as a central axis. More specifically, in the homing traveling area, a first homing boundary line (not illustrated) and a second homing boundary line (not illustrated) between which the boundary line 290 is interposed and which are parallel to the boundary line 290 are defined, and the homing traveling area is defined as a region between the first homing boundary line and the second homing boundary line.

Since the moving robot 100 is moved while changing the direction by a random number of times within the homing traveling area, the possibility of damage to the ground during homing traveling is reduced.

After the moving robot 100 moves to the docking device 200, the controller 190 resets the position of the moving robot 100 based on the position of the docking device 200. Specifically, the controller 190 recognizes the position where the boundary signal detector 177 detects the docking position signal generated from the docking device 200 as the position of the docking device 200, and the position of the docking device 200 is set to the position of the current moving robot 100. The controller 190 may store the reset position in the storage 166.

After the moving robot 100 resets the position of the moving robot 100, the controller 190 may control the travel 120 so that the moving robot 100 moves to the second traveling area A2 based on the reset position of the moving robot 100, and then, travels the second traveling area A2. Specifically, referring to FIG. 11c, after the moving robot 100 resets the position of the moving robot 100, the controller 190 controls the traveler 120 so that the moving robot 100 moves along the boundary signal to a traveling starting point of the second traveling area A2 based on the reset position of the moving robot 100. In this case, the controller 190 may move to the traveling starting point of the second traveling area A2 while the moving robot 100 randomly travels in an arbitrary area within a predetermined distance from the boundary signal.

Referring to FIG. 11d, the moving robot 100 travels in the second traveling area A2 at the traveling starting point.

The controller 190 may control the traveler 120 so that the moving robot 100 completes the traveling of the first traveling area A1, resets the position, and then, performs the second pattern traveling at the same direction angle as the first direction angle. Here, the same direction angle does not mean the exact same in a mathematical sense, but will mean the same in an engineering sense including errors to some extent.

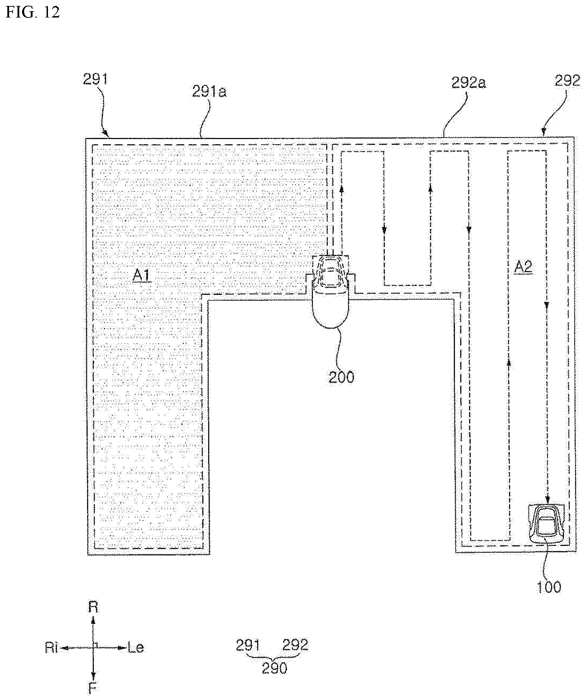

Hereinafter, a traveling method of the moving robot 100 according to the second example will be described with reference to FIG. 12. The second example differs from the first example in the traveling method of the second traveling area A2. Unless otherwise stated, other components of the second example are considered to be the same as those of the first example.

The controller 190 controls the traveler 120 so that the moving robot 100 completes the traveling of the first traveling area A1, resets the position of the moving robot 100, and then, performs the second pattern traveling at a second direction angle intersecting the first direction angle.

The controller 190 may randomly calculate a second direction angle of the second pattern traveling in a direction intersecting the first direction angle. For example, an angle between the first direction angle and the second direction angle may be 88° to 92°. Preferably, the angle between the first direction angle and the second direction angle may be 90°. More specifically, the controller 190 may calculate, as the second direction angle, one randomly selected value among values having an angle between 85° and 95° with the first direction angle.

Specifically, the second direction angle of the second pattern travel may be 358° to 2 °, and the progress direction angle of the second pattern travel may be 88° to 92°. The moving robot 100 may perform the pattern traveling with an up-down direction as the major axis LA and a right-left direction as the minor axis (SA).

For efficient pattern traveling, the second direction angle may be calculated parallel to the boundary of the traveling area adjacent to the traveling starting point of the second pattern traveling. Specifically, the controller 190 may calculate a second direction angle parallel to a left end portion 291b of the boundary wire 290.

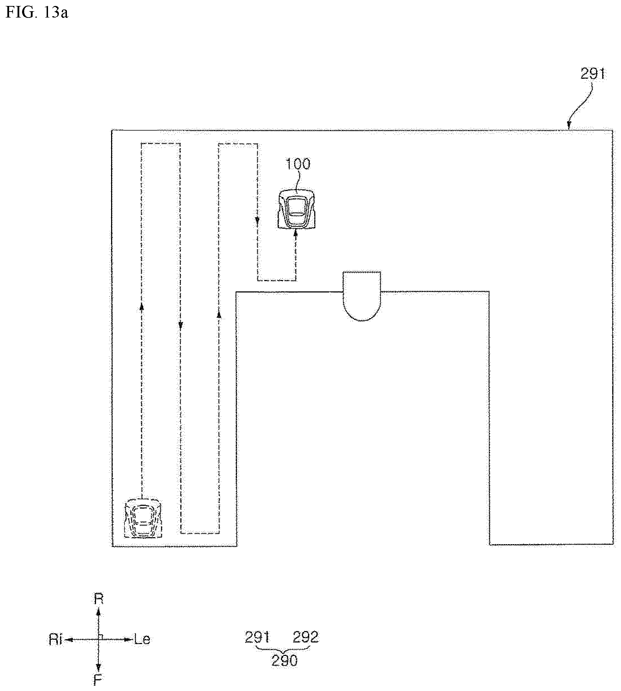

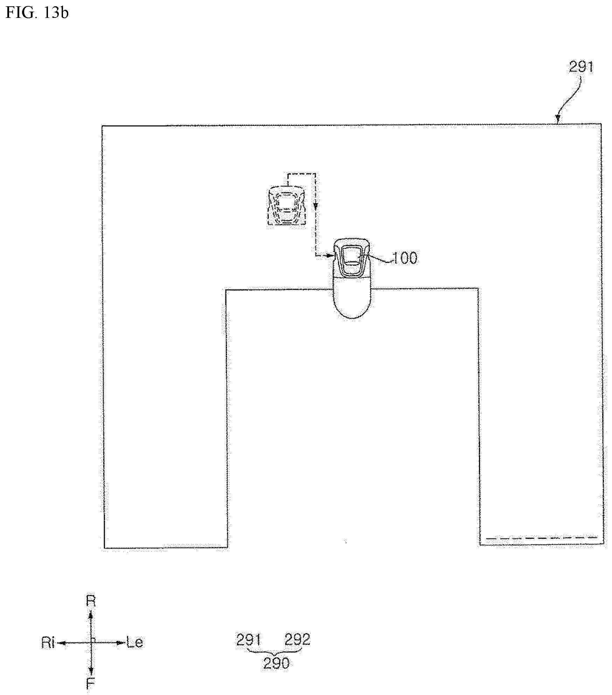

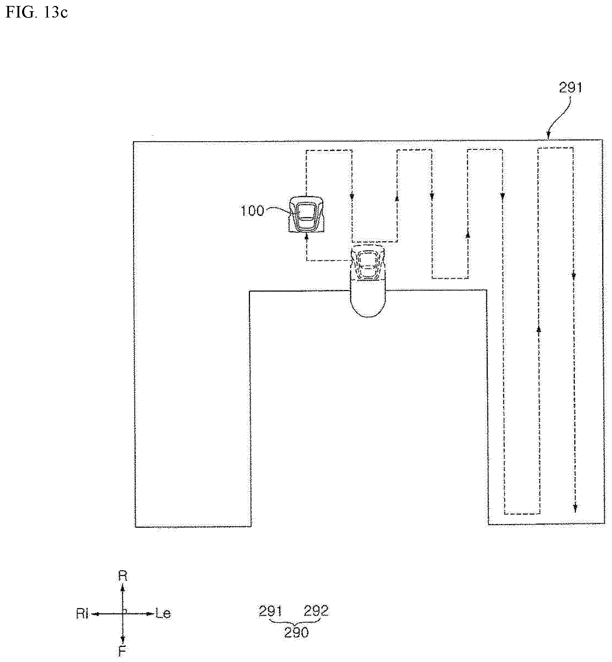

Hereinafter, a traveling method of the moving robot 100 according to the embodiment will be described with reference to FIG. 13. Hereinafter, the absence of any special description is regarded as the same as that in the first example.

Referring to FIGS. 13a and 13b, the controller 190 control the moving robot 100 so that when a preset time elapses from a traveling start of the moving robot 100 while the moving robot 100 travels the traveling area, the moving robot 100 moves to the docking device 200, and then resets the position of the moving robot 100 based on the position of the docking device 200.

The controller 190 may control the traveler 120 so that the moving robot 100 returns to the docking device when the preset time elapses while the moving robot travels in the traveling area.

After the moving robot 100 moves to the docking device 200, the controller 190 resets the position of the moving robot 100 based on the position of the docking device 200. Specifically, the controller 190 recognizes the position where the boundary signal detector 177 detects the docking position signal generated from the docking device 200 as the position of the docking device 200, and set the position of the docking device 200 as the current position of the moving robot 100. The controller 190 may store the reset position in the storage 166.

Referring to FIG. 13c, after the moving robot 100 resets the position of the moving robot 100, the controller 190 may control the traveler 120 so that the moving robot 100 continues incomplete traveling in the traveling area based on the reset position of the moving robot 100. Specifically, when the preset time elapses, the moving robot 100 stores a point where the work in the traveling area is stopped, resets the position of the moving robot 100, and thereafter, moves to the point where the work in the traveling area is stopped, again, and performs the work on the incomplete area.

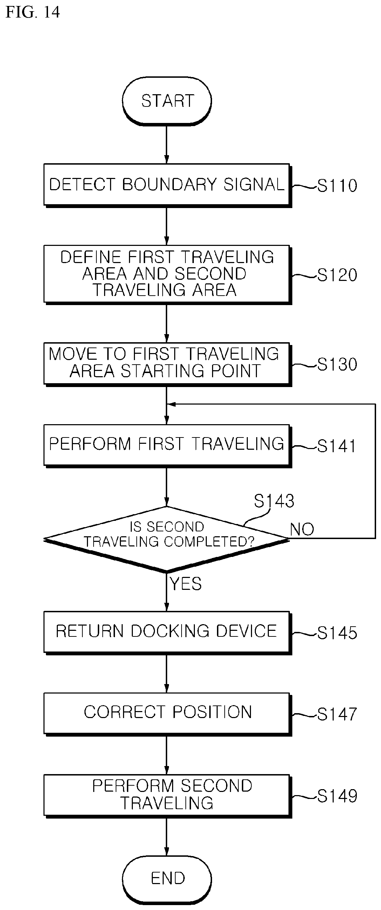

Hereinafter, a control method of the moving robot 100 according to a first example of the present disclosure will be described with reference to FIG. 14.

The control method of the moving robot 100 according to an embodiment of the present disclosure includes a division step of defining a traveling area based on a boundary signal and dividing the traveling area into a first traveling area A1 and a second traveling area A2, a first traveling step of the moving robot 100 traveling in the first traveling area A1, a returning step of the moving robot 100 returning to a docking device after completing the first traveling, and a position correction step of resetting the position of the moving robot 100 based on a docking position signal generated in the docking device.

In the division step, the moving robot 100 travels while detecting the boundary signal (S110). The moving robot 100 defines a traveling area based on a boundary signal, and divides the traveling area into at least a first traveling area A1 and a second traveling area A2 (S120).

After the division step, the moving robot 100 moves from the docking device to the starting point of the first traveling area A1 along the boundary of the traveling area (S130).

The moving robot 100 travels the first traveling area A1 at the starting point of the first traveling area A1 (S141). Specifically, the moving robot 100 may perform the first pattern traveling at a first direction angle.

The moving robot 100 determines whether the first traveling of the first traveling area A1 is completed (S143), and when it is determined that the first traveling has been completed, the moving robot 100 returns to the docking device (S145).

The moving robot 100 resets the position of the moving robot 100 based on the docking position signal generated from the docking device (S147). The moving robot 100 may store the reset position in the storage 166.

After the moving robot 100 resets the position, the moving robot 100 moves to the traveling starting point of the second traveling area A2 based on the reset position. When the moving robot 100 moves to the traveling starting point of the second traveling area A2, the moving robot 100 may move along the boundary signal.

The moving robot 100 travels the second traveling area A2 at the traveling starting point of the second traveling area A2 (S149).

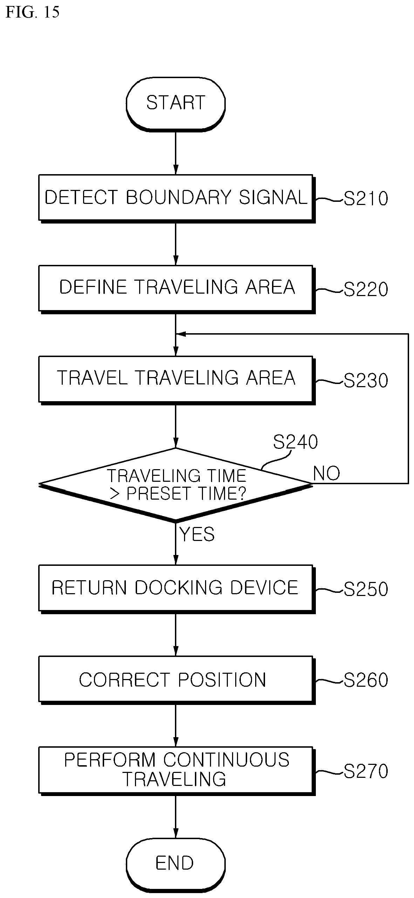

Hereinafter, a control method of the moving robot 100 according to an embodiment of the present disclosure will be described with reference to FIG. 15.

The control method of the moving robot 100 according to an embodiment of the present disclosure includes a traveling area definition step of defining a traveling area based on a boundary signal, a traveling step of the moving robot 100 traveling the traveling area, a returning step of the moving robot 100 returning to a docking device when a preset time while the moving robot travels the traveling area, and a position correction step of resetting a position of the moving robot 100 based on a docking position signal generated in the docking device.

In the traveling area definition step, the moving robot 100 travels while detecting the boundary signal (S210). The moving robot 100 defines the traveling area based on the boundary signal (S220).

After the traveling area definition step, the moving robot 100 moves from the docking device to the starting point of the traveling area along the boundary of the traveling area. The moving robot 100 travels the traveling area at the traveling area starting point (S230).

The moving robot determines whether the preset time has elapsed from the traveling starting point while traveling in the traveling area (S240), and if the preset time has elapsed, the moving robot returns to the docking device (S250).

After the moving robot 100 move to the docking device 200, the moving robot 100 resets the position of the moving robot 100 based on the position of the docking device 200 (S260). The moving robot 100 may store the reset position in the storage 166.

After the moving robot 100 resets the position, the moving robot 100 continues to perform incomplete traveling in the traveling area based on the reset position of the moving robot 100. Specifically, when the preset time elapses, the moving robot 100 stores the point where the work in the traveling area is stopped, resets the position of the moving robot 100, and thereafter, moves to the point where the work in the traveling area is stopped, again, and performs the work on the incomplete area.

## Claims

1. A moving robot comprising:
a body (110);
a traveler (120) configured to move the body (110);
a boundary signal detector (177) configured to detect a boundary signal generated in a boundary of a traveling area and a docking position signal generated in a docking device (200);
a sensor (176) configured to sense an acceleration of the body (110); and
a controller (190) configured to define the traveling area based on the boundary signal,
**characterized in that**: a position correction of the moving robot is required when a preset time elapses from a traveling start of the moving robot, and when the position correction of the moving robot is required while the moving robot travels the traveling area, the controller (190) is configured to reset a position of a moving robot based on a position of the docking device (200) after the moving robot moves to the docking device (200), wherein the position is reset, thereby reducing the accumulation of positional errors between a position of the moving robot on a map and an actual position of the moving robot.

2. The moving robot of claim 1, wherein, when the preset time elapses, the moving robot is configured to store a point where work in the traveling is stopped, to reset the position of the moving robot, and thereafter to move to the point where the work in the traveling is stopped and perform the work on an incomplete area.

3. The moving robot of claim 1, wherein the controller (190) is configured to control the traveler (120) so that the moving robot moves along the boundary signal when the moving robot moves to the docking device (200).

4. The moving robot of claim 1, wherein the controller (190) is configured to control the traveler (120) so that, when the moving robot moves to the docking device (200), the moving robot changes a traveling direction by a random number of times within an area set with a boundary wire (290), wherein changing is calculated based on the boundary signal generated by the boundary wire (290) as a central axis.

5. The moving robot of claim 1, wherein the boundary signal detector (177) is configured to distinguish the docking position signal and the boundary signal by a difference in a direction of a magnetic field.

6. A control method of a moving robot comprising:
a traveling area definition step of defining a traveling area based on a boundary signal;
a traveling step of a moving robot traveling the traveling area;
a returning step of the moving robot returning to a docking device (200) when a preset time elapses from a traveling starting point while the moving robot travels the traveling area; and
a position correction step of resetting a position of the moving robot based on a docking position signal generated in the docking device (200), wherein a position where the docking position signal generated from the docking device (200) is detected is set as a position of the docking device (200) and the position of the docking device (200) is set to a current position of the moving robot (100), wherein the position is reset, thereby reducing the accumulation of positional errors between a position of the moving robot on a map and an actual position of the moving robot.

7. The control method of claim 6, further comprising:
a continuous traveling step of the moving robot, wherein, when the preset time elapses, the moving robot stores a point where work in the traveling is stopped, resets the position of the moving robot, and thereafter moves to the point where the work in the traveling is stopped and performs the work on an incomplete area.

## Patentansprüche

1. Beweglicher Roboter, der umfasst:
einen Körper (110);
einen Vorschubwagen (120), der konfiguriert ist, den Körper (110) zu bewegen;
einen Grenzsignaldetektor (177), der konfiguriert ist, ein Grenzsignal, das in einer Grenze eines Fahrtbereichs erzeugt wird, und ein Andockpositionssignal, das in einer Andockvorrichtung (200) erzeugt wird, zu detektieren;
einen Sensor (176), der konfiguriert ist, eine Beschleunigung des Körpers (110) zu erfassen; und
eine Steuereinheit (190), die konfiguriert ist, den Fahrtbereich anhand des Grenzsignals zu definieren,
**dadurch gekennzeichnet, dass**: eine Positionskorrektur des beweglichen Roboters erforderlich ist, wenn eine voreingestellte Zeit seit einem Fahrtbeginn des beweglichen Roboters abläuft, und dann, wenn die Positionskorrektur des beweglichen Roboters erforderlich ist, während der bewegliche Roboter den Fahrtbereich befährt, die Steuereinheit (190) konfiguriert ist, eine Position eines beweglichen Roboters anhand einer Position der Andockvorrichtung (200) zurückzustellen, nachdem sich der bewegliche Roboter zu der Andockvorrichtung (200) bewegt, wobei die Position zurückgestellt wird, wodurch die Ansammlung von Positionsfehlern zwischen einer Position des beweglichen Roboters auf einer Karte und einer tatsächlichen Position des beweglichen Roboters verringert wird.

2. Beweglicher Roboter nach Anspruch 1, wobei dann, wenn die voreingestellte Zeit abläuft, der bewegliche Roboter konfiguriert ist, einen Punkt zu speichern, wo die Arbeit beim Fahren gestoppt wird, die Position des beweglichen Roboters zurückzustellen und sich danach bis zu dem Punkt zu bewegen, wo die Arbeit beim Fahren gestoppt wird, und die Arbeit an einem nicht vollendeten Bereich auszuführen.

3. Beweglicher Roboter nach Anspruch 1, wobei die Steuereinheit (190) konfiguriert ist, den Vorschubwagen (120) derart zu steuern, dass sich der bewegliche Roboter entlang des Grenzsignals bewegt, wenn sich der bewegliche Roboter zu der Andockvorrichtung (200) bewegt.

4. Beweglicher Roboter nach Anspruch 1, wobei die Steuereinheit (190) konfiguriert ist, den Vorschubwagen (120) derart zu steuern, dass dann, wenn sich der bewegliche Roboter zu der Andockvorrichtung (200) bewegt, der bewegliche Roboter eine Fahrtrichtung in einer zufälligen Anzahl innerhalb eines Bereichs, der mit einem Grenzdraht (290) eingestellt ist, ändert, wobei das Ändern anhand des durch den Grenzdraht (290) als einer zentralen Achse erzeugten Grenzsignals berechnet wird.

5. Beweglicher Roboter nach Anspruch 1, wobei der Grenzsignaldetektor (177) konfiguriert ist, das Andockpositionssignal und das Grenzsignal durch einen Unterschied in einer Richtung eines magnetischen Feldes zu unterscheiden.

6. Steuerverfahren eines beweglichen Roboters, das umfasst:
einen Fahrtbereichsdefinitionsschritt des Definierens eines Fahrtbereichs anhand eines Grenzsignals;
einen Fahrtschritt eines Befahrens des Fahrtbereichs des beweglichen Roboters;
einen Rückkehrschritt des Zurückkehrens des beweglichen Roboters zu einer Andockvorrichtung (200), wenn eine voreingestellte Zeit seit einem Fahrtstartpunkt abläuft, während der bewegliche Roboter den Fahrtbereich befährt; und
einen Positionskorrekturschritt des Zurückstellens einer Position des beweglichen Roboters anhand eines Andockpositionssignals, das in der Andockvorrichtung (200) erzeugt wird, wobei eine Position, wo das Andockpositionssignal, das von der Andockvorrichtung (200) erzeugt wird, detektiert wird, als eine Position der Andockvorrichtung (200) eingestellt wird und die Position der Andockvorrichtung (200) auf eine aktuelle Position des beweglichen Roboters (100) eingestellt wird, wobei die Position zurückgestellt wird, wodurch die Ansammlung von Positionsfehlern zwischen einer Position des beweglichen Roboters auf einer Karte und einer tatsächlichen Position des beweglichen Roboters verringert wird.

7. Steuerverfahren nach Anspruch 6, das ferner umfasst:
einen Schritt eines kontinuierlichen Fahrens des beweglichen Roboters, wobei dann, wenn die voreingestellte Zeit abläuft, der bewegliche Roboter einen Punkt speichert, wo die Arbeit beim Fahren gestoppt wird, die Position des beweglichen Roboters zurücksetzt, und sich danach zu dem Punkt bewegt, wo die Arbeit beim Fahren gestoppt wird, und die Arbeit an einem nicht vollendeten Bereich ausführt.

## Revendications

1. Robot mobile comportant :
un corps (110) ;
un dispositif de déplacement (120) configuré pour déplacer le corps (110) ;
un détecteur de signal de frontière (177) configuré pour détecter un signal de frontière généré dans une frontière d'une zone de déplacement et un signal de position d'accueil généré dans un dispositif d'accueil (200) ;
un capteur (176) configuré pour détecter une accélération du corps (110) ; et
une commande (190) configurée pour définir la zone de déplacement sur la base du signal de frontière,
**caractérisé en ce que** : une correction de position du robot mobile est requise lorsqu'un temps préréglé s'écoule à partir d'un début de déplacement du robot mobile, et lorsque la correction de position du robot mobile est requise pendant que le robot mobile parcourt la zone de déplacement, la commande (190) est configurée pour réinitialiser une position d'un robot mobile sur la base d'une position du dispositif d'accueil (200) après que le robot mobile se déplace jusqu'au dispositif d'accueil (200), dans lequel la position est réinitialisée, en réduisant ainsi l'accumulation d'erreurs de position entre une position du robot mobile sur une carte et une position réelle du robot mobile.

2. Robot mobile selon la revendication 1, dans lequel, lorsque le temps préréglé s'écoule, le robot mobile est configuré pour stocker un point où un travail pendant le déplacement est arrêté, pour réinitialiser la position du robot mobile, et pour se déplacer ensuite jusqu'au point où le travail pendant le déplacement est arrêté et réaliser le travail sur une zone incomplète.

3. Robot mobile selon la revendication 1, dans lequel la commande (190) est configurée pour commander le dispositif de déplacement (120) de sorte que le robot mobile se déplace le long du signal de frontière lorsque le robot mobile se déplace jusqu'au dispositif d'accueil (200).

4. Robot mobile selon la revendication 1, dans lequel la commande (190) est configurée pour commander le dispositif de déplacement (120) de sorte que, lorsque le robot mobile se déplace jusqu'au dispositif d'accueil (200), le robot mobile change une direction de déplacement par un nombre de fois aléatoire à l'intérieur d'une zone définie avec un fil de frontière (290), dans lequel un changement est calculé sur la base du signal de frontière généré par le fil de frontière (290) comme un axe central.

5. Robot mobile selon la revendication 1, dans lequel le détecteur de signal de frontière (177) est configuré pour distinguer le signal de position d'accueil et le signal de frontière par une différence de direction d'un champ magnétique.

6. Procédé de commande d'un robot mobile comportant :
une étape de définition de zone de déplacement consistant à définir une zone de déplacement sur la base d'un signal de frontière ;
une étape de déplacement d'un robot mobile parcourant la zone de déplacement ;
une étape de retour du robot mobile retournant à un dispositif d'accueil (200) lorsqu'un temps prédéfini s'écoule à partir d'un point de début de déplacement pendant que le robot mobile parcourt la zone de déplacement ; et
une étape de correction de position consistant à réinitialiser une position du robot mobile sur la base d'un signal de position d'accueil généré dans le dispositif d'accueil (200), dans lequel une position où le signal de position d'accueil généré à partir du dispositif d'accueil (200) est détectée, est réglée comme une position du dispositif d'accueil (200) et la position du dispositif d'accueil (200) est réglée à une position actuelle du robot mobile (100), dans lequel la position est réinitialisée, en réduisant ainsi l'accumulation d'erreurs de position entre une position du robot mobile sur une carte et une position réelle du robot mobile.

7. Procédé de commande selon la revendication 6, comportant en outre :
une étape de déplacement continu du robot mobile, dans lequel, lorsque le temps prédéfini s'écoule, le robot mobile stocke un point où un travail pendant le déplacement est arrêté, réinitialise la position du robot mobile, et se déplace ensuite jusqu'au point où le travail pendant le déplacement est arrêté et réalise le travail sur une zone incomplète.
